# EUROPEAN PATENT SPECIFICATION

(11) **EP 3 425 463 B1**
(45) Date of publication and mention of the grant of the patent: **12.07.2023**
(21) Application number: 16892466.0
(22) Date of filing: 29.02.2016
(51) Int. Cl.: G05B 19/418, G06Q 50/04, B25H 3/06

(54) **COMPONENT MANAGEMENT SYSTEM, COMPONENT MANAGEMENT SERVER, COMPONENT MANAGEMENT METHOD, AND SERVING TRAY**
KOMPONENTENVERWALTUNGSSYSTEM, KOMPONENTENVERWALTUNGSSERVER, KOMPONENTENVERWALTUNGSVERFAHREN UND SERVIERTABLETT
SYSTÈME DE GESTION DE COMPOSANT, SERVEUR DE GESTION DE COMPOSANT, PROCÉDÉ DE GESTION DE COMPOSANT ET PLATEAU DE SERVICE

(43) Date of publication of application: 09.01.2019
(73) Proprietor: Hitachi Systems, Ltd., Tokyo 141-8672 (JP); Kyoto Tool Co., Ltd., Kyoto-shi Kyoto 612-8393 (JP); Hitachi, Ltd., Tokyo 100-8280 (JP)
(72) Inventor: INOUE, Kunihiro, Matsudo-shi Chiba 271-0092 (JP); YAMAUCHI, Shigeru, Tokyo 141-8672 (JP); KAWAZOE, Toru, Tokyo 141-8672 (JP); SARUYAMA, Masaaki, Tokyo 141-8672 (JP); NISHIOKA,Masaaki, Kyoto 613-0034 (JP); NAKATA, Shogo, Kyoto 613-0034 (JP); OKADA, Norihisa, Tokyo 100-8280 (JP)
(74) Representative: Zimmermann, Tankred Klaus
(86) International application number: PCT/JP2016/056128
(87) International publication number: WO 2017/149621

(56) References cited:
- EP-A1- 1 783 570
- JP-A- 2008 090 453
- JP-A- 2008 130 873
- JP-A- 2010 215 305
- JP-B2- 4 949 417
- JP-U- H0 362 736
- US-A1- 2010 289 626
- US-A1- 2013 332 323
- US-B2- 7 557 709

## Description

### {Technical Field}

The present invention relates to a component management system.

### {Background Art}

At an assembling step of (when manufacturing and when maintaining and inspecting) railway vehicles, aircraft (railway vehicles and so on hereinafter), and so on, a fastening work is performed, in which a worker uses a torque wrench and tighten screws or the like until set torque so as to fasten respective component parts. There are various types of component parts of the railway vehicles and the like, and thus, clamping aspects that is objects of the fastening work, the diameter, the length, and the like of a shank of the screw are composed of various types of screw.

For example, in an assembling process of an aircraft disclosed in PTL 1, a worker carries a basket in which a plurality of types of screws, bolts, and the like required for fastening work are stored together beforehand. When taking an appropriate screw, bolt, and the like described in a work instruction out of the basket, the worker checks them visually to take them out of the basket. Therefore, if the worker takes out an inappropriate screw and fasten it, there is a possibility that problems such as loosening of the screw, bolt, or the like and insufficient strength occur afterwards. From a viewpoint of preventing such problems, informing the worker of the error or the like has been performed from a system side.

US 7 557 709 B2 discloses an item tracking system which makes use RFID technology for automatically monitoring the taking and returning operations of items from a storage location inside a working area which allows to have an almost "on line" status of each tool as well as the using history of each tool. The system "knows" which item has been taken or stored from which storage area by which worker and when.

US 2013/332323 A1 discloses an inventory control system including an object storage device including a drawer or a tray for housing objects. A sensing device acquires an image including information about the objects stored in the object storage device. An interface circuitry is in communication with the sensing device and generates object data based on the image acquired by the sensing device. A processor provides an integrated network access and transmit the object data across a network.

US 2010/289626 A1 discloses a tool tray comprising a body with tool shaped recesses. A Radio Frequency Identification (RFID) tag can be positioned in one of the recesses. The RFID tag can be such that when no tool is placed in the one of the recesses, the tag is not detectable at a reading distance; but, when a corresponding tool is placed into the one of the recesses, the RFID tag is detectable from a reading distance.

### {Citation List}

### {Patent Literature}

{PTL 1} JP 4949417B

### {Summary of Invention}

### {Technical Problem}

In the management system for taking out screw described in PTL 1, a proximity sensor, a photoelectric switch, or a weight sensor is attached to an accommodating portion for screws to judge the presence or absence of a screw. Then, whether or not taking out of the screw is incorrect is determined based on the state of presence or absence of the screw. Further, in another embodiment described in PTL 1, it is designed that a wireless IC tag is attached to a screw itself and the presence or absence of the screw is detected by an IC tag reader.

However, there are the following problems even in these methods. First, it is described that elastic material capable of holding screws by elastic restoration force is used for the accommodating portion disclosed in PTL 1. Therefore, even though the accommodating portion of a storage case has a dedicated shape corresponding to the type of the screw, since the material of the accommodating portion is an elastic material, if the other screw has a shape similar to the shape of the accommodating portion, there is a possibility that the accommodating portion mistakenly accommodates the other screw. Further, even when such an event occurs, in the above-described method, since judgment is made only based on the presence or absence of parts accommodation, it is difficult for the system side to detect the error.

Further, even in the method in which the wireless IC tag disclosed in PTL 1 is attached to a screw and the presence or absence of the screw is detected and recognized by the IC tag reader, it is difficult for the system side to concretely specify at which position of the accommodating portion in the basket the screw having the wireless IC tag is accommodated.

The present invention has been made in consideration of at least one of the above-described problems, and an object thereof is to provide a component management system being able to dispose a plurality of types of components at desired places in the serving tray, securely recognize a disposed position and a positional relationship between the place where the components are disposed, and inform them.

### {Solution to Problem}

In order to solve the above-described problems, the present invention provides a component management system according to claim 1. The invention is defined by the appended claim.

### {Advantageous Effects of Invention}

According to the present invention, it is possible to provide a component management system which is able to dispose a plurality of types of components at desired places on the serving tray, securely grasp a disposed position and a positional relationship between the place where the components are disposed, and inform them.

### {Brief Description of Drawings}

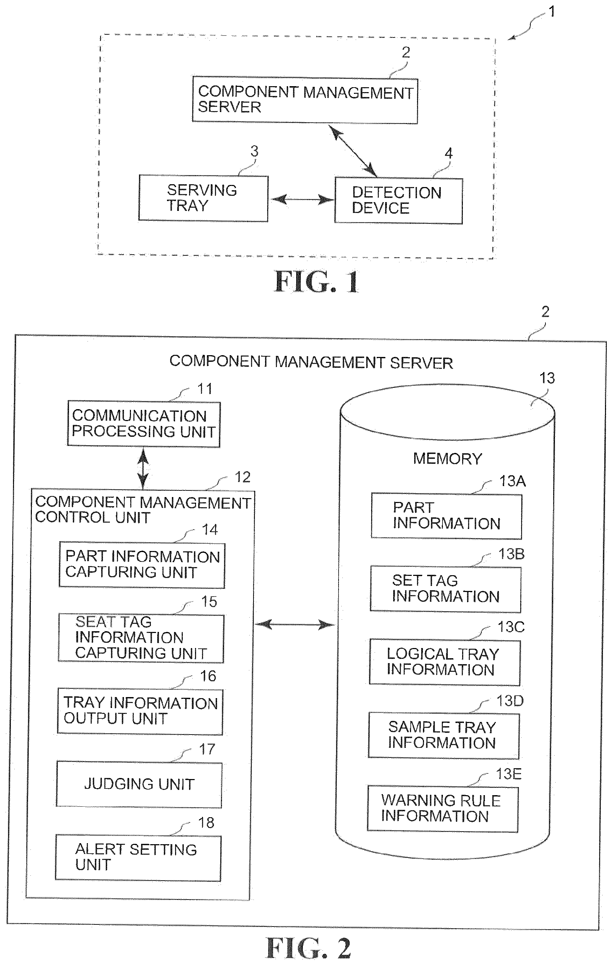

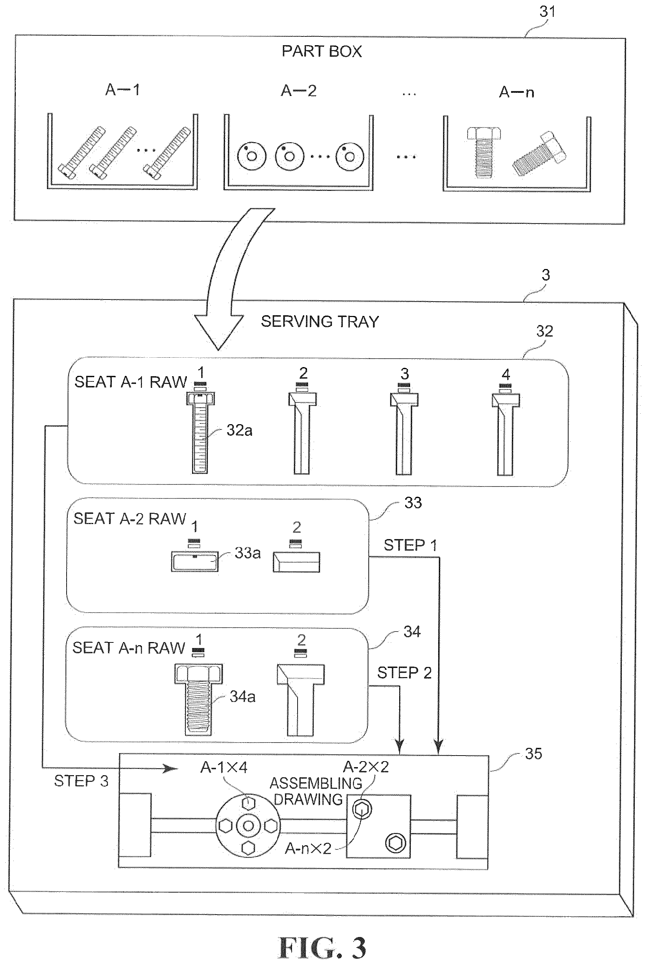

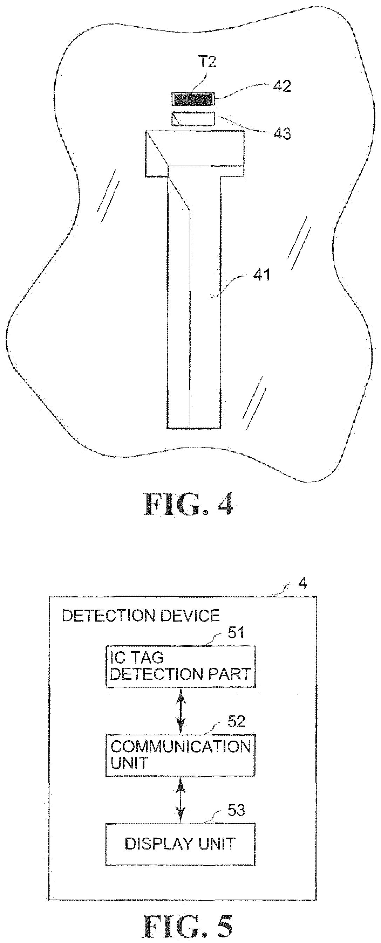

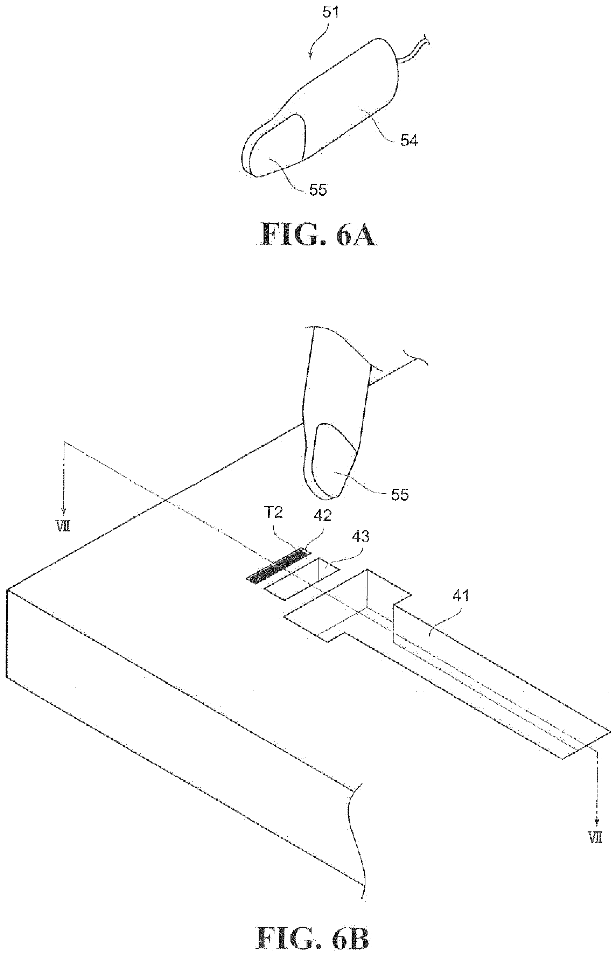

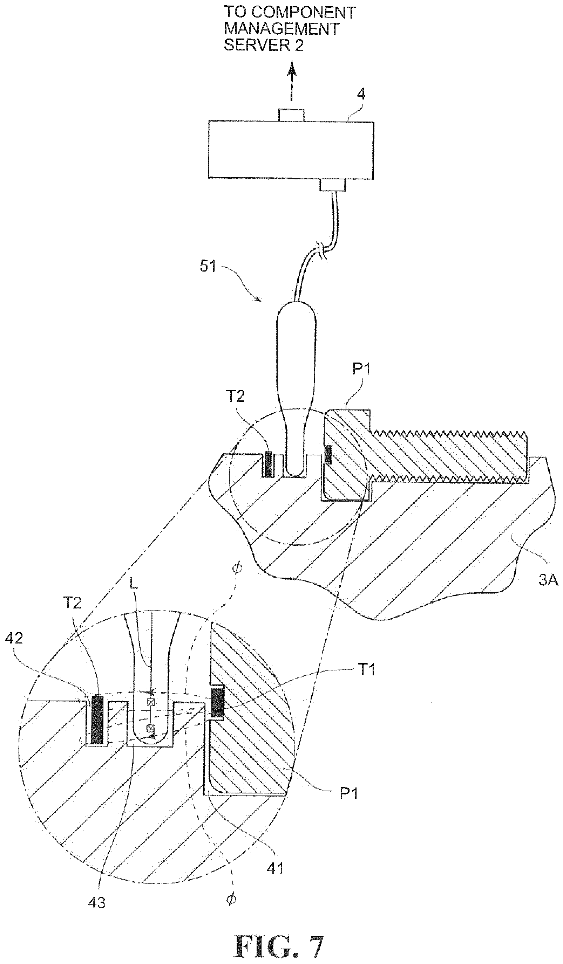

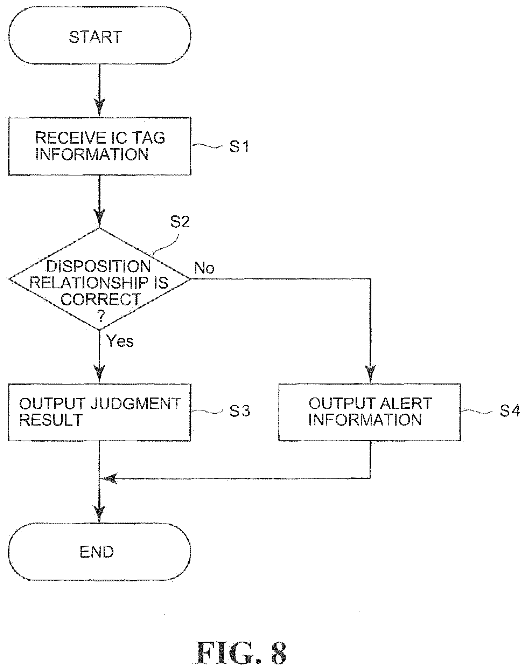

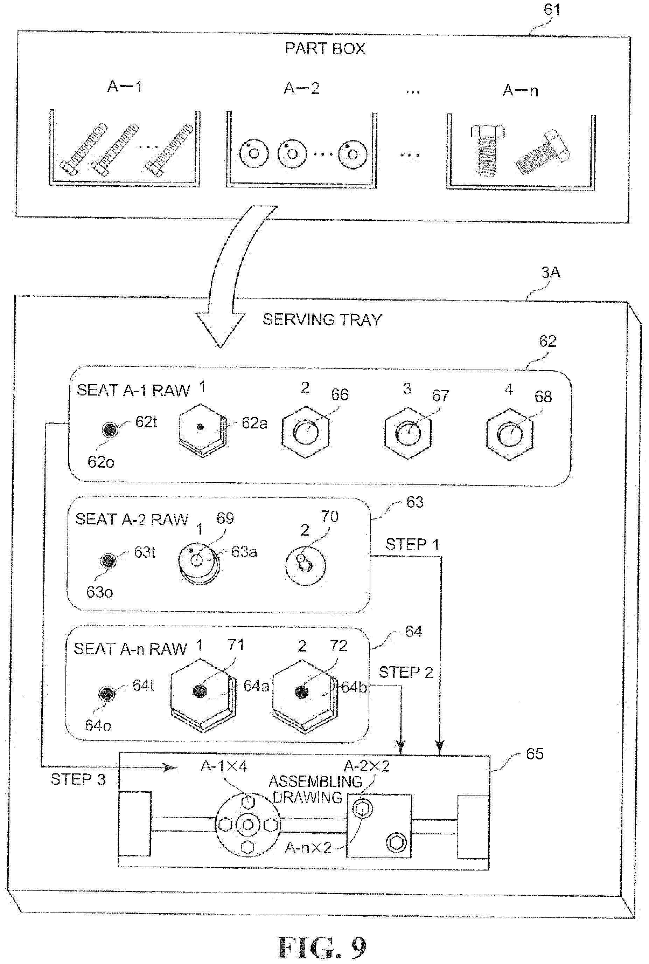

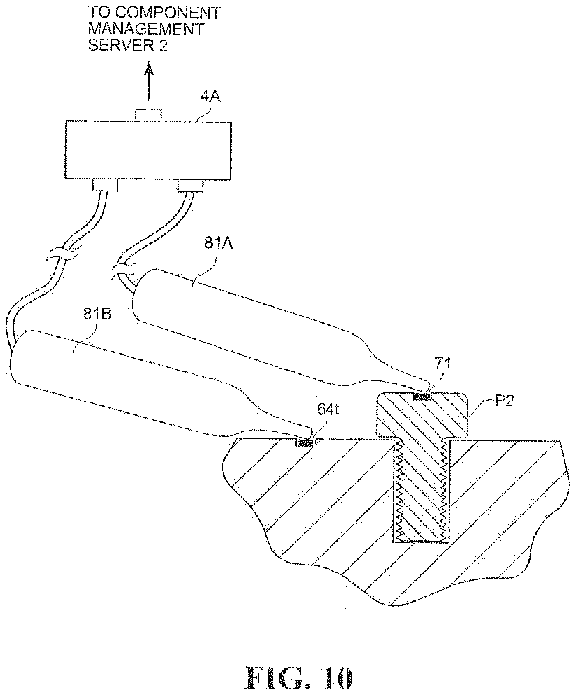

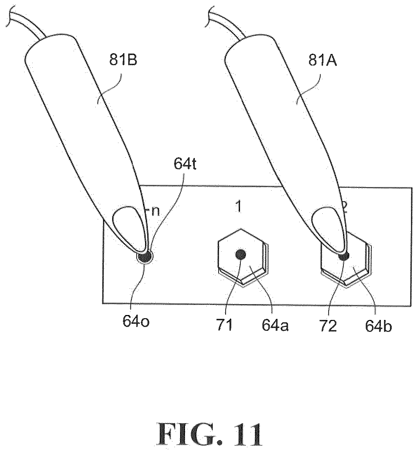

{Fig. 1} Fig. 1 is a diagram illustrating a schematic constitution of a component management system according to a first embodiment of the present invention.
{Fig. 2} Fig. 2 is a diagram illustrating a schematic configuration of a component management server illustrated in Fig. 1.
{Fig. 3} Fig. 3 is a conceptual diagram for explaining one example of a serving tray and a part box illustrated in Fig. 1.
{Fig. 4} Fig. 4 is a view for explaining the relationship between a component storage portion 41 for storing a component contained in a region in Fig. 3, a seat tag storage portion, and a plug-in portion for detection.
{Fig. 5} Fig. 5 is a diagram illustrating a functional configuration of a detection device illustrated in Fig. 1.
{Fig. 6A and Fig. 6B} Fig. 6A and Fig. 6B are views for explaining the detection device and a detection method, Fig. 6A is one example of an IC tag detection part, and Fig. 6B is a view for explaining the method of simultaneously detecting two IC tags by the IC tag detection part.
{Fig. 7} FIG. 7 is a cross-sectional view taken along the line A-A illustrated in FIG. 5 and a partially enlarged view, where a tip portion of the IC tag detection part of the detection device is inserted in the plug-in portion for detection in a state where an IC-tag-attached bolt having an IC tag is accommodated to the component storage portion illustrated in Fig. 5 and an IC tag is accommodated in the seat tag storage portion.
{Fig. 8} Fig. 8 is a flowchart for explaining a component management method.
{Fig. 9} Fig. 9 is a diagram illustrating one example of a serving tray in a second embodiment of the present invention.
{Fig. 10} Fig. 10 is a diagram illustrating one example of a detection device 4A in the second embodiment of the present invention.
{Fig. 11} Fig. 11 is a diagram illustrating a detection example of a component and a seat tag by the detection device illustrated in Fig. 10.

### {Description of Embodiments}

Hereinafter, embodiments of the present invention will be explained with reference to the attached drawings.

### (First embodiment)

Fig. 1 is a diagram illustrating a schematic constitution of a component management system 1 according to a first embodiment of the present invention. This component management system 1 includes a component management server 2, a serving tray 3, and a detection device 4. Incidentally, the component management server 2 and the detection device 4 are constituted so as to be able to communicate with each other via a wired or wireless communication network (not illustrated), and the serving tray 3 and the detection device 4 are constituted so as to be able to communicate with each other via a wired or wireless communication network (not illustrated).

### (Regarding the component management server 2)

The component management server 2 is one example of the component management server of the claim. The component management server 2 is a server for performing management of components such as bolts and screws that are served on the serving tray 3. Incidentally, the component management server 2 is what is called a server computer and includes, for example, a CPU (Central Processing Unit), a RAM (Random Access Memory), a ROM (Read Only Memory), a HDD (Hard Disk Drive), a communication interface, and so on, and the CPU reads programs stored in the ROM, the HDD, and the like in the RAM to execute them, thereby making it possible to perform later-described respective functions that the server has. Incidentally, a hardware configuration of the component management server 2 is not limited to the above-described configuration, and can be changed appropriately. For example, the component management server 2 may be configured to include a SSD (Flash Solid State Drive) in place of the HDD, or in addition to the HDD. Further, as the hardware configuration of the component management server 2, in addition to the above-described configuration, the component management server 2 may include output means such as a display and a speaker and input means such as a mouse, a keyboard, and a tablet.

Fig. 2 is a diagram illustrating a schematic configuration of the component management server 2 illustrated in Fig. 1. The component management server 2 includes a communication processing unit 11, a component management control unit 12, and a memory 13.

The communication processing unit 11 is one example of the receiving unit and the output unit of the claim. The communication processing unit 11 is an interface for communicating with an external device by wire or wireless.

The component management control unit 12 includes a part information capturing unit 14, a seat tag information capturing unit 15, a tray information output unit 16, a judging unit 17, and an alert setting unit 18.

The part information capturing unit 14 performs processing to capture information on a component that has to be disposed on the serving tray 3. For example, when a worker uses the detection device 4 to read recorded information from an IC tag (first IC tag) embedded in the component, the recorded information is transmitted to the part information capturing unit 14 and the part information capturing unit 14 stores part information 13A in the memory 13. The worker in this example performs a work to pick up each components from a later-described part box 31 to attach it on the serving tray 3. In this case, the recorded information of the IC tag embedded in each the components, which is read by the detection device 4, is transmitted to the part information capturing unit 14.

The seat tag information capturing unit 15 performs processing to capture information on a position on the serving tray 3. For example, when the worker uses the detection device 4 to read position information from an IC tag (second IC tag, to be sometimes referred to as a seat tag, hereinafter) already embedded in the vicinity of a part storage portion in the serving tray 3, the position information is transmitted to the seat tag information capturing unit 15 and the seat tag information capturing unit 15 stores seat tag information 13B in the memory 13. The worker in this example performs a work to take each components out of the serving tray 3. In this case, the position information read by the detection device 4 is transmitted to the seat tag information capturing unit 15.

The tray information output unit 16 outputs information on the components and information on the positions on the serving tray 3 based on the part information 13A captured in the part information capturing unit 14 and the seat tag information 13B captured in the seat tag information capturing unit 15. Further, the tray information output unit 16 can also output logical tray information 13C and sample tray information 13D, which will be described later. Further, the tray information output unit 16 can also output a judgment result of the later-described judging unit 17.

The judging unit 17 refers to the memory 13 (database) based on the recorded information received in the communication processing unit 11 to judge whether the component and the position of the component on the serving tray 3 are in a correct disposition relationship. Incidentally, the judgment result of the judging unit 17 is supplied to the tray information output unit 16.

The alert setting unit 18, based on later-described warning rule information 13E, can inform the worker of the disposition on the serving tray 3 and whether the taken-out part itself is correct or false.

In the memory 13, the part information 13A, the seat tag information 13B, the logical tray information 13C, the sample tray information 13D, the warning rule information 13E, and so on are stored. Incidentally, the memory 13 may be built as an integrated database that enables searching, adding, deleting, changing, and the like of these pieces of information.

The part information 13A is, in the case of the component being a hexagon head bolt, for example, identification information of an IC tag embedded in the hexagon head bolt, a name of equipment to which the hexagon head bolt is attached, a bolt size, a bolt length under head, a bolt material, tightening torque, the number of bolts, and so on.

The seat tag information 13B is, for example, identification information of an IC tag disposed in the serving tray 3, information indicating the position on the serving tray 3, and so on. Incidentally, the logical tray information 13C and the sample tray information 13D will be described later.

### (Regarding the serving tray 3)

The serving tray 3 is one example of the serving tray of the claim. The serving tray 3, in which for example, components such as a plurality of types of screws and bolts, which are used at an assembling step of a railway vehicle, are stored, is a tray for serving the components to a work site. Incidentally, the serving tray 3 is made of resin, and so on, for example.

Incidentally, the component in this embodiment is an IC-tag-attached bolt in which an IC tag is embedded in a bolt head, for example. As for the IC-tag-attached bolt, some types of bolt with an IC-tag are designed so that a high-frequency current such as a standing wave, which is different from an eddy current, flows on the metal surface of the bolt when high-frequency electromagnetic wave in an UHF band is irradiated to the metal surface, and the bolt is detected with high sensitivity. And, in the case where the detector can be brought sufficiently closely to the IC-tag, it is not necessary to form a projection portion by accommodating the IC tag to the bolt in three dimensions, where the IC tag is perpendicular to the metal surface of the bolt so that such high-frequency current flows easily. By the way, in the case where the detector is brought sufficiently close to the IC tag to be able to overcome detection prevention and repulsion of the eddy current, it is possible to simply dispose the IC tag on the metal surface of the bolt so as to make a coil antenna surface (not illustrated) inside the IC tag parallel to the metal surface of the bolt, resulting in that a formation to eliminate the projection portion is enabled when attaching the IC tag.

Fig. 3 is a conceptual diagram for explaining one example of the serving tray 3 illustrated in Fig. 1 and the part box 31. The serving tray 3 illustrated in Fig. 3 has a region 32, a region 33, and a region 34 for storing components A-1, components A-2, and components A-n, which are stored in the parts box 31, respectively. Further, in the serving tray 3, an actual assembling drawing 35 and steps of the use of the components stored in the region 32, the region 33, and the region 34 are drawn.

In the serving tray 3, the region 32 is defined as a seat A-1 raw, the region 33 is defined as a seat A-2 raw, and the region 34 is defined as a seat A-n raw, and they are described clearly. Further, components to be used in a step 3 are accommodated in recessed portions in the seat A-1 raw, and it is clearly expressed that a component 33a and a component 33b embedded in the seat A-2 raw are used in a step 1, and a component 34a and a component 34b embedded in the seat A-n raw are used in a step 2. Further, in the assembling drawing 35, a portion and a place to which the steps is to be used is also clearly expressed. Incidentally, the example illustrated in Fig. 3 illustrates a state where only the components 32a, 33a, and 34a are stored in the recessed portions with the number described as 1 in the respective regions, and illustrates a state where components are not yet stored in the other recessed portions.

Fig. 4 is a view for explaining the relationship between a component storage portion 41 for storing the component contained in the region 32 in Fig. 3, a seat tag storage portion 42, and a plug-in detecting portion 43.

The component storage portion 41 is one example of the first storage portion of the claim. The component storage portion 41 is a recessed portion having a shape fit for the shape of the component. For example, in the case of the component being a bolt, the component storage portion 41 has a shape in which the bolt is stored in the recessed portion of the component storage portion 41. Incidentally, the component may be stored into the component storage portion 41 in a state where an elastic member such as a sponge is fitted in the component storage portion 41.

The seat tag storage portion 42 is one example of the second storage portion of the claim. The seat tag storage portion 42 is a recessed portion provided in the vicinity of the component storage portion 41 and the later-described plug-in detecting portion 43. In the seat tag storage portion 42, an IC tag T2 (seat tag, second IC tag) in which information for identifying the position of the serving tray 3 is recorded is embedded. Incidentally, the vicinity of the component storage portion 41 and the vicinity of the later-described plug-in detecting portion 43 mentioned after mean a range as follows. It is to say that, the detection device 4 inserted in the plug-in detecting portion 43 can detect IC tags in the range. One of such IC-tags is embedded in the component such as the IC-tag-attached bolt, which is stored in the component storage portion 41, and the other of such IC-tags is stored in the seat tag storage portion 42. Of course, this range changes according to the output power of electromagnetic waves output from the detection device 4, but is preferred as it is closer to a (not-illustrated) loop coil antenna provided with the detection device 4 generally. For example, in the case where the electromagnetic wave is set to electromagnetic waves in a UHF band of 920 MHz and the IC tag is set to the type IM5-PK2525 manufactured by Hitachi Chemical Company, Ltd., the detection limit is about 5 mm. In this case, the space between the component storage portion 41 and the plug-in detecting portion 43 and the space between the plug-in detecting portion 43 and the seat tag storage portion 42 are each 0 mm or more and 10 mm or less, and most preferably set to 0 mm or more and about 5 mm or less, which is the detection limit. Incidentally, in the case where each space between the storage portions is 0 mm, a state where the component storage portion 41 and the plug-in detecting portion 43 are integrated, a state where plug-in detecting portion 43 and the seat tag storage portion 42 are integrated, or a state where the component storage portion 41, the plug-in detecting portion 43, and the seat tag storage portion 42 are all integrated is made.

The plug-in detecting portion 43 is one example of the plug-in detecting portion of the claim. The plug-in detecting portion 43 is a recessed portion provided between the component storage portion 41 and the seat tag storage portion 42. The tip of the detection device 4 is inserted in the plug-in detecting portion 43, thereby making it possible to detect both the IC tag embedded in the component stored in the component storage portion 41 and the seat tag stored in the seat tag storage portion 42.

### (Regarding the detection device 4)

The detection device 4 is one example of the detection device of the claim. The detection device 4 is a device for detecting the IC tag (seat tag) indicating the component in the serving tray 3 and the position in the serving tray 3. Fig. 5 is a diagram illustrating a functional configuration of the detection device 4 illustrated in Fig. 1. As illustrated in Fig. 5, the detection device 4 includes an IC tag detection part 51, a communication unit 52, and a display unit 53. Incidentally, the detection device 4 in this example has these functions as one device, but does not always need to be configured as one device. For example, only a display device may be another device, or the IC tag detection part 51 and the communication unit 52 may be configured in another device.

The IC tag detection part 51 is one example of the acquisition part of the claim. The IC tag detection part 51 can acquire a detection signal from the loop coil antenna (not illustrated) built in the tip and, based on the signal, acquire each identification information from the IC tag embedded in the component and the IC tag (seat tag) indicating the position in the serving tray 3.

The communication unit 52 is one example of the transmission processing unit of the claim. The communication unit 52 is a communication interface for the IC tag detection part 51 to exchange information with the component management server 2. The communication unit 52 is, for example, a Bluetooth (registered trademark) module, a Wifi module, another radio communication module, or the like. Incidentally, the communication unit 52 is not always able to communicate with the component management server 2 directly, and may be a USB interface, for example, and in this case, it may be designed so that a device that has directly communicated with the component management server 2 and the USB interface are connected to transmit/receive information therebetween.

The display unit 53 displays the identification information read from the IC tag by the IC tag detection part 51, or information acquired from the identification information. Incidentally, the display unit 53 may be configured to display information transmitted from the component management server 2.

Fig. 6A and Fig. 6B are views for explaining the detection device 4 and explaining a detection method, and Fig. 6A is one example of the IC tag detection part 51, and Fig. 6B is a view for explaining the method of simultaneously detecting the two IC tags by the IC tag detection part 51. As illustrated in Fig. 6A, the IC tag detection part 51 includes a long and narrow bar-shaped grip portion 54 and a plate-shaped tip portion 55. In the tip portion 55, the coil antenna (not illustrated) is built. As illustrated in Fig. 6B, the tip portion 55 is inserted in the plug-in detecting portion 43, thereby making it possible to detect both the IC tag T2 stored in the seat tag storage portion 42 and the IC tag embedded in the component stored in the component storage portion 41, which is not illustrated.

Fig. 7 is an A-A cross-sectional view of Fig. 6 and its partial enlarged view. In Fig 7, a component P1 having an IC tag T1 is stored in the component storage portion 41 illustrated in Fig. 6, the IC tag T2 is attached in the seat tag storage portion 42, and, in the above-mentioned state, the tip portion 55 of the IC tag detection part 51 of the detection device 4 is inserted in the plug-in detecting portion 43. As illustrated in the enlarged view of Fig. 7, in the case of the component P1 having the IC tag T1 being a metal bolt, a loop of magnetic lines of force of mutual induction does not enter the metal and is distributed in the space and a non-metal resin material. That is, magnetic lines of force F are distributed in a state of avoiding the component P1, resulting that magnetic lines of force Φ become a closed loop of magnetic lines of force centered on the line L, which is a mutual induction between the IC tag T1 and the IC tag T2. That is, an antenna coil included in the IC tag T1 and an antenna coil included in the IC tag T2 are coupled by the loop of magnetic lines of force Φ in the mutual induction relationship, to thereby detect the information recorded in the IC tag T1 and the IC tag T2. Incidentally, an antenna coil surface (parallel to L, which is not illustrated) of the IC tag detection part 51, an antenna coil surface of the IC tag T1, and an antenna coil surface of the IC tag T2 are preferred to be parallel to one another. However, the angel rang of the coil surfaces may be a range from parallel (θ = 0° or 180°) to an angle other than orthogonal (θ = 90°) as long as it has a sharing part of magnetic force line Φ.

### (Regarding the component management method)

Then, there will be explained the component management method to be executed by the component management server 2. The following processing is processing to be performed when the components are stored. Fig. 8 is a flowchart for explaining the component management method. Incidentally, as a premise for the following processing, it is set that a worker has prepared the serving tray 3, and the part box 31 in which components to be stored in the serving tray 3 are stored and read IC tags by the detection device 4 to transmit information to the component management server 2.

The worker stores a predetermined component in a predetermined place in the serving tray 3 while browsing a work instruction or the like. Then, the worker inserts the IC tag detection part 51 of the detection device 4 in the plug-in detecting portion 43 disposed near the place in which the component has been stored. As has been explained in Fig. 7, this makes it possible to detect the two IC tags only by a one-time detection operation.

Step S1: the communication processing unit 11 receives identification information of the component recorded in the IC tag embedded in the component and information for identifying the position in the serving tray 3, which is recorded in the IC tag embedded in the serving tray 3 in which the component has been stored. In the component management server 2, the information received at Step S1 are captured in the part information capturing unit 14 and the seat tag information capturing unit 15 respectively to be stored in the memory 13.

Step S2: the judging unit 17 refers to the memory 13 (database) in which a position information on the serving tray 3 where the component has to be stored and the identification information of the component are associated with each other and judges whether the component is in a correct disposition relationship. When the disposition relationship is correct, the judging unit 17 advances the processing to Step S3, and when the disposition relationship is not correct, the judging unit 17 advances the processing to Step S4.

Step S3: as a result of the judgment at Step S2, it is judged that it is correct, and thus the tray information output unit 16 outputs the result and finishes the processing (END). Incidentally, an output destination may be a display that the component management server 2 includes, the display unit of the detection device that the worker uses, or another output destination.

Step S4: as a result of the judgment at Step S2, it is judged that the disposition relationship is not correct, and thus the tray information output unit 16 outputs alert information and finishes the processing (END). Incidentally, as for the alert information, based on the warning rule information 13E stored in the memory 13, the content of warning message may be changed or how to give a warning (for example, image blinking, a sound reminder, vibrations, or the like) may be controlled.

As above, according to the component management system 1 of the first embodiment, the serving tray 3 includes: the component storage portion 41 (first storage portion) having a shape corresponding to the type of the bolt P1 (component) having the IC tag T1 (first IC tag); the IC tag T2 (second IC tag) in which the information for identifying the position on the serving tray 3 is recorded; and the seat tag storage portion 42 (second storage portion) accommodating the IC tag T2, the detection device 4 includes: the IC tag detection part 51 (acquisition part) that acquires the recorded information of the IC tag T1 embedded in the bolt P1 and the recorded information of the IC tag T2; and the communication unit 52 (transmission processing unit) that transmits pieces of the recorded information acquired in the IC tag detection part 51 to the component management server 2, and the component management server 2 includes: the communication processing unit 11 (receiving unit) that receives the recorded information of the IC tag T1 and the recorded information of the IC tag T2 that are detected by the detection device 4; the memory 13 (database) in which the information of the position on the serving tray 3 and the identification information of the component are associated with each other , the component being stored on the serving tray; the judging unit 17 (judging unit) that refers to the memory 13 based on pieces of the recorded information received in the communication processing unit 11 and judges whether the bolt P1 is in a correct disposition relationship; and the tray information output unit 16 (output unit) that outputs the judgment result of the judging unit 17, and thus it is possible to judge which component is disposed in the serving tray 3 and whether it is correct and output a result. That is, when the disposition is inappropriate, it is possible to output that the disposition is inappropriate, and when it is correct, it is possible to output that the disposition relationship is correct, and thus it is possible to securely dispose a plurality of types of screws or a component such as the bolt P1, which is likely to be mistaken by visual inspection, in a desired place in the serving tray. Further, as for the information regarding the disposition place as well, the information can be acquired from the IC tag T2 stored in the seat tag storage portion 42 when reading the IC tag of the component, so that it is possible to securely recognize the positional relationship of the component and inform the worker of the positional relationship.

Further, the component management server 2 that performs management of components and the operation of the component management server (component management method) also include: similarly to the above-described component management system 1, the communication processing unit 11 (receiving unit) that receives the identification information of the component that is recorded in the first IC tag embedded in the component and the information for identifying the position in the serving tray 3, which is recorded in the second IC tag embedded in the serving tray 3 in which the component is stored; the memory 13 (database) in which the information of the position in the serving tray 3 in which the component has to be stored and the identification information of the component are associated with each other; the judging unit 17 (judging unit) that refers to the memory 13 based on pieces of the recorded information received in the communication processing unit 11 and judges whether or not the component is in a correct disposition relationship; and the tray information output unit 16 (output unit) that outputs the judgment result of the judging unit 17, and thus it is possible to exhibit the effects similar to those of the above-described component management system 1.

Further, the serving tray 3 in this example include: the component storage portion 41 (first storage portion) that corresponds to the shape of the bolt P1 (component) having the IC tag T1 (first IC tag); the IC tag T2 (second IC tag) in which the information for identifying the position on the serving tray 3 is recorded; the seat tag storage portion 42 (second storage portion) for storing the IC tag T2 (second IC tag); and the plug-in detecting portion 43 (third storage portion) that establishes a disposition relationship that enables reading of both the IC tag T1 (first IC tag) embedded in the component stored in the component storage portion 41 and the IC tag T2 (second IC tag) stored in the seat tag storage portion 42 by a predetermined detection operation, and thus performing only a predetermined detection operation makes it possible to efficiently acquire pieces of information on specification and disposition of the component to be stored on the serving tray 3.

Further, the operation of the detection device 4 corresponding to the serving tray 3 in this example is to detect the first IC tag embedded in the component stored on the serving tray 3 and detect the second IC tag indicating the position on the serving tray 3, and the detection device 4 executes these detection steps by a predetermined detection operation, and thus performing only the predetermined detection operation makes it possible to efficiently acquire pieces of the information on specification and disposition of the component to be stored on the serving tray 3.

### (Second embodiment)

Next, there will be explained a second embodiment of the present invention. In the second embodiment, the configuration of a reader and writer part in the detection device 4 and the method of disposing the seat tag are different from those in the above-described first embodiment. Concretely, a detection device 4A includes two IC tag detection parts 81A, 81B (Fig. 10). Further, the seat tag is disposed not in the vicinity of the storage portion in which a component is to be stored, but in a predetermined region.

Fig. 9 is a conceptual diagram for explaining one example of a serving tray 3A and a part box 61 in the second embodiment of the present invention. The serving tray 3A illustrated in Fig. 9 has a region 62, a region 63, and a region 64 for storing therein components A-1, components A-2, and components A-n, which are stored in the part box 61, and in these regions, IC tags 62t, 63t, and 64t for identifying positions on the serving tray 3A and components 62a, 63a, 64a, and 64b are disposed. Further, on the serving tray 3A, in an actual assembling drawing 65, there is drawn a step where the components 62a, 63a, 64a, and 64b that are stored in the region 62, the region 63, and the region 64 respectively are used. Incidentally, the serving tray 3A illustrated in Fig. 9 is in a state where all components necessary for each of the steps are not disposed.

In the serving tray 3A, the region 62 is defined as a seat A-1 raw, the region 63 is defined as a seat A-2 raw, and the region 64 is defined as a seat A-n raw, and it is designed so as to be able to clearly grasp in which step the component disposed in each of the regions is used. That is, it is constituted that in recessed portions 66, 67, and 68 (in which, for example, a bar-shaped component, a bolt, and so on are inserted) in the seat A-1 raw, components to be used in a step 3 (not illustrated) are disposed, on a projection 69 (onto which, for example, a washer or the like is fitted) in the seat A-2 raw, the component 63a is disposed, which is easily grasped to be used in a step 1, and in a not-illustrated recessed portion disposed in the seat A-n raw, the component 64a is disposed, which is easily grasped to be used in a step 2. Further, the assembling drawing 65 also clearly illustrates in which portion of which part each of the steps is used.

Incidentally, in the serving tray 3A, unlike the serving tray 3 illustrated in Fig. 3, disposition of the IC tag indicating the position is not provided for each component, but the IC tags 62t, 63t, and 64t are embedded respectively in recessed portions 62o, 63o, and 64o provided in the regions 62, 63, and 64 respectively. Fig. 10 is a view illustrating one example of the detection device 4A and the IC tag detection parts 81A, 81B in the second embodiment of the present invention. Fig. 11 is a view illustrating an example where an IC tag 72 of the component 64b is detected by the detection device 4A illustrated in Fig. 10. As illustrated in Fig. 10 and Fig. 11, in this example, while the IC tag detection part 81A (first IC tag detection part) reading the IC tag 72 embedded in the component 64b, the IC tag detection part 81B (second IC tag detection part) reads the IC tag 64t indicating the position on the serving tray 3A.

As above, the serving tray 3A in the second embodiment of the present invention has been explained. In the serving tray 3A, unlike the serving tray 3, processing to improve consistency of the recessed portion for the detection part insertion is not required, where the recessed portion is for simultaneously detecting two IC tags and intensifying electromagnetic coupling, such as a tag center line for detection. Further, it is a method to use the two detection parts, and thus as compared to the serving tray 3, even when types of components are increased, the serving tray 3A can flexibly correspond to these changes.

### (Regarding practical use of the logical tray information and the sample tray information)

Subsequently, there will be explained the serving trays 3, 3A to be drawn based on the logical tray information 13C. Pieces of the recorded information of the IC tags in which pieces of information indicating the positions on the serving trays 3, 3A and the components are recorded are utilized, thereby making it possible to associate CAD data such as an assembling drawing of an article to be a working object with the position of the component each other in real time. For example, based on pieces of the recorded information of the IC tags detected by the detection device 4 or 4A, current progress or the like is displayed by updating an image, a video, or the like associated with the serving tray explained in Fig. 3 or Fig. 9 as needed, and thereby it is possible to easily grasp also the progress of the current work or the like visually.

Further, it is also possible to present sample information of the serving tray 3 or 3A based on specifications, a work instruction, or the like.

### {Reference Signs List}

1: component management system, 2: component management server, 3, 3A: serving tray, 4, 4A: detection device, 11: communication processing unit, 12: component management control unit, 13: memory, 14: part information capturing unit, 15: seat tag information capturing unit, 16: tray information output unit, 17: judging unit, 18: alert setting unit, 31: part box, 41: component storage portion, 42: seat tag embedded portion, 43: plug-in detecting portion, 51: IC tag detection part, 52: communication unit, 53: display unit, 54: grip portion, 55: tip portion, 61: part box, 81A, 81B: IC tag detection part

## Claims

1. A component management system (1) comprising:
a portable serving tray (3), in which a plurality of types of components are stored;
a detection device (4) configured to detect identification information of the components stored in the serving tray(3); and
a component management server (2) configured to receive the identification information detected by the detection device (4) and to perform management of the components,
wherein the portable serving tray (3) comprises:
- a first storage portion (41) that corresponds to a shape of a component, the component having a first Integrated Circuit, IC, tag (T1);
- a second IC tag (T2) in which position information for identifying a position on the serving tray (3) is recorded;
- a second storage portion (42) for storing the second IC tag (T2); and
- a plug-in detecting portion (43) which is configured to establish a disposition relationship enabling the detection device (4) to read both the first IC tag (T1) stored in the component accommodated in the first storage portion (41) and the second IC tag (T2) stored in the second storage portion (42), the reading being in a predetermined detection operation, and
wherein the detection device (4) includes:
- an acquisition part (51) that is configured to acquire recorded information of the first IC tag (T1), the recorded information includes an identification information of the component, and recorded position information of the second IC tag (T2); and
- a transmission processing unit (52) that is configured to transmit the recorded information and the position information which are acquired in the acquisition part (51) to the component management server (2), and
wherein the component management server (2) includes:
- a receiving unit (11) that is configured to receive the recorded information of the first IC tag (T1) and the position information of the second IC tag (T2) that are detected by the detection device (4);
- a database (13) in which information of a position on the serving tray (3) in which the component has to be stored and the identification information of the component are associated with each other;
- a judging unit (17) that is configured to refer to the database (13) on the basis of the recorded information of the first IC tag (T1) and the position information of the second IC tag (T2) which are received in the receiving unit (11) and to judge whether or not the component is in a correct disposition relationship; and
- an output unit (16) that is configured to output a judgment result of the judging unit (17).

## Patentansprüche

1. Ein Komponentenverwaltungssystem (1), das folgende Merkmale aufweist:
eine tragbare Bereitstellungsschale (3), in der eine Mehrzahl von Arten von Komponenten aufbewahrt werden;
eine Detektionsvorrichtung (4), die dazu konfiguriert ist, Identifizierungsinformationen der in der Bereitstellungsschale (3) aufbewahrten Komponenten zu detektieren; und
ein Komponentenverwaltungsserver (2), der dazu konfiguriert ist, durch die Identifizierungsvorrichtung (4) detektierte Identifizierungsinformationen zu empfangen und eine Verwaltung der Komponenten auszuführen,
wobei die tragbare Bereitstellungsschale (3) folgende Merkmale aufweist:
- einen ersten Aufbewahrungsabschnitt (41), der einer Form einer Komponente entspricht, wobei die Komponente eine erste Integrierte-Schaltung-, IC, -Kennung (T1) aufweist;
- eine zweite IC-Kennung (T2), in der Positionsinformationen zum Identifizieren einer Position der Bereitstellungsschale (3) aufgezeichnet sind;
- einen zweiten Aufbewahrungsabschnitt (42) zum Aufbewahren der zweiten IC-Kennung (T2); und
- einen Einsteckdetektionsabschnitt (43), der dazu konfiguriert ist, eine Anordnungsbeziehung herzustellen, die es ermöglicht, dass die Detektionsvorrichtung (4) sowohl die IC-Kennung (T1), die in der Komponente aufbewahrt wird, welche in dem ersten Aufbewahrungsabschnitt (41) untergebracht ist, und die zweite IC-Kennung (T2) zu lesen, die in dem zweiten Aufbewahrungsabschnitt (42) aufbewahrt wird, wobei das Lesen in einer vorbestimmten Detektionsoperation stattfindet, und
wobei die Detektionsvorrichtung (4) Folgendes umfasst:
- ein Erhaltungsteil (51), das dazu konfiguriert ist, aufgezeichnete Informationen der ersten IC-Kennung (T1), wobei die aufgezeichneten Informationen Identifizierungsinformationen der Komponente umfassen, und aufgezeichnete Positionsinformationen der zweiten IC-Kennung (T2) zu erhalten; und
- eine Übertragungsverarbeitungseinheit (52), die dazu konfiguriert ist, die aufgezeichneten Informationen und die Positionsinformationen, die in dem Erhaltungsteil (51) erhalten werden, an den Komponentenverwaltungsserver (2) zu übertragen, und
wobei der Komponentenverwaltungsserver (2) Folgendes umfasst:
- eine Empfangseinheit (11), die dazu konfiguriert ist, die aufgezeichneten Informationen der ersten IC-Kennung (T1) und die Positionsinformationen der zweiten IC-Kennung (T2), die durch die Detektionsvorrichtung (4) detektiert werden, zu empfangen;
- eine Datenbank (13), in der Informationen einer Position der Bereitstellungsschale (3), in der die Komponente aufzubewahren sind, und die Identifizierungsinformationen der Komponente miteinander in Verbindung gebracht werden;
- eine Beurteilungseinheit (17), die dazu konfiguriert ist, sich auf der Basis der aufgezeichneten Informationen der ersten IC-Kennung (T1) und der Positionsinformationen der zweiten IC-Kennung (T2), die in der Empfangseinheit (11) empfangen werden, auf die Datenbank (13) zu beziehen und zu beurteilen, ob die Komponente in einer korrekten Anordnungsbeziehung ist oder nicht; und
- eine Ausgabeeinheit (16), die dazu konfiguriert ist, ein Beurteilungsergebnis der Beurteilungseinheit (17) auszugeben.

## Revendications

1. Système de gestion de composants (1) comprenant:
un plateau de service portable (3) dans lequel sont stockés une pluralité de types de composants;
un dispositif de détection (4) configuré pour détecter les informations d'identification des composants stockés dans le plateau de service (3); et
un serveur de gestion de composants (2) configuré pour recevoir les informations d'identification détectées par le dispositif de détection (4) et pour effectuer la gestion des composants,
dans lequel le plateau de service portable (3) comprend:
- une première partie de stockage (41) qui correspond à une forme d'un composant, le composant présentant une première étiquette de Circuit Intégré, CI, (T1);
- une deuxième étiquette de CI (T2) dans laquelle sont enregistrées les informations de position pour identifier une position sur le plateau de service (3);
- une deuxième partie de stockage (42) destinée à stocker la deuxième étiquette de CI (T2); et
- une partie de détection enfichable (43) qui est configurée pour établir un rapport de disposition permettant au dispositif de détection (4) de lire tant la première étiquette de CI (T1) stockée dans le composant hébergé dans la première partie de stockage (41) que la deuxième étiquette de CI (T2) stockée dans la deuxième partie de stockage (42), la lecture s'effectuant lors d'une opération de détection prédéterminée, et
dans lequel le dispositif de détection (4) comprend:
- une partie d'acquisition (51) qui est configurée pour acquérir les informations enregistrées de la première étiquette de CI (T1), les informations enregistrées comportent une information d'identification du composant, et les informations de position enregistrées de la deuxième étiquette de CI (T2); et
- une unité de traitement de transmission (52) qui est configurée pour transmettre les informations enregistrées et les informations de position qui sont acquises dans la partie d'acquisition (51) au serveur de gestion de composants (2), et
dans lequel le serveur de gestion de composants (2) comporte:
- une unité de réception (11) qui est configurée pour recevoir les informations enregistrées de la première étiquette de CI (T1) et les informations de position de la deuxième étiquette de CI (T2) qui sont détectées par le dispositif de détection (4);
- une base de données (13) dans laquelle sont associées les unes aux autres les informations d'une position sur le plateau de service (3) dans lequel doit être stocké le composant et les informations d'identification du composant;
- une unité de jugement (17) qui est configurée pour se référer à la base de données (13) sur base des informations enregistrées de la première étiquette de CI (T1) et des informations de position de la deuxième étiquette de CI (T2) qui sont reçues dans le l'unité de réception (11) et pour juger si le composant présente ou non un rapport de disposition correct; et
- une unité de sortie (16) qui est configurée pour sortir un résultat de jugement de l'unité de jugement (17).
